# EUROPEAN PATENT SPECIFICATION

(11) **EP 1 010 904 B1**
(45) Date of publication and mention of the grant of the patent: **15.09.2004**
(21) Application number: 98123481.8
(22) Date of filing: 14.12.1998
(51) Int. Cl.: F16C 11/06

(54) **Ball joint**
Kugelgelenk
Articulation à rotule

(43) Date of publication of application: 21.06.2000
(73) Proprietor: Musashi Seimitsu Kogyo Kabushiki Kaisha, Toyohashi-Shi, Aichi-Ken (JP)
(72) Inventor: Yagi, Yasunori, Toyohashi-Shi, Aichi-Ken (JP)
(74) Representative: Liesegang, Roland, Dr.-Ing.

(56) References cited:
- DE-A- 4 209 646
- US-A- 4 121 844
- US-A- 4 322 175

## Description

This invention relates to a ball joint and a dust cover for use with a ball joint as used in for example, a connecting section of an automotive suspension system.

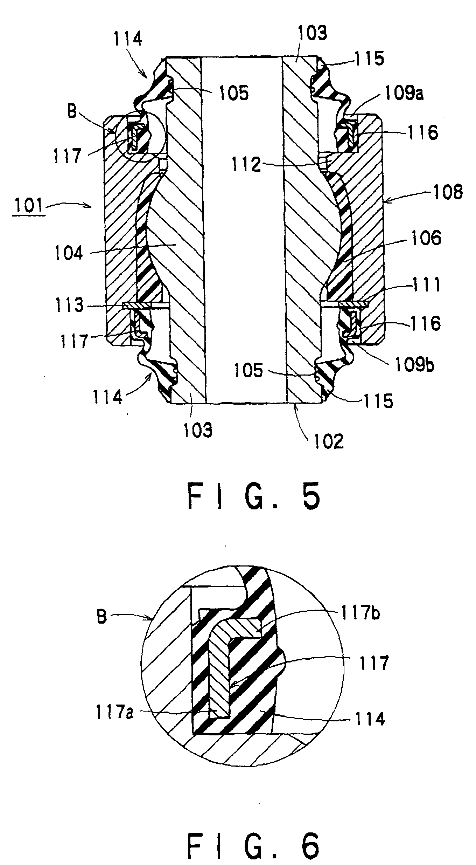

A conventional ball joint, which is used in, for example, a connecting section of an automotive suspension system is shown in longitudinal section in Fig 5. The ball joint 101 shown comprises: a ball stud 102 having a spherical head 104 and stems 103, 103 projecting oppositely from the spherical head 104; a bearing 106 slidably receiving the spherical head 104 of the ball stud 102; and a housing 108 holding the bearing 106 therein.

Annular fitting grooves 105, 105 are formed at the outer circumferential surfaces of both the stems 103, 103 of the ball stud 102 respectively.

The housing 108 has a substantially cylindrical shape. The housing 108 has a one side opening 109a through which the one stem 103 of the ball stud 102 projects, and another side opening 109b through which the other stem 103 of the ball stud 102 projects. An annular protrusion 112 is formed on the inside surface of the one side opening 109a. An annular groove 111 is formed in the inside surface of the other side opening 109b.

A ring 113 is fitted in the groove 111 of the housing 108. The ring 113 is a C-shaped element, which is substantially annular except a cut-off portion.

Dust covers 114, 114 are fitted between the stems 103, 103 of the ball stud 102 and the housing 108, respectively. Each dust cover 114 comprises a reduced open end 115 fitted in the annular groove 105 of the stem 103 of the ball stud 102, and an enlarged open end 116 fitted in the opening 109a or 109b of the housing 108. A reinforcing ring 117 is embedded in the enlarged open end 116 of the dust cover 114.

As shown in Fig.6, the reinforcing ring 117 of the dust cover 114 consists of: a straight portion 117a which is parallel with the axis of the enlarged open end 116; and a lateral portion 117b which extends from an end of the straight portion 117a farther from the bearing 106 toward the inside of the dust cover 114 at a right angle to the straight portion 117a.

In the conventional ball joint 101, each dust cover 114 is fixed in pressed contact with the inside surface of the opening 109a or 109b of the housing 108 by means of only the elastic force of the enlarged open end 116 of the dust cover 114. Thus the fixing force of the dust cover 114 in the housing 108 is so weak that the dust cover 114 may slip out of the housing 108 when the ball stud 102 is tilted at a large angle.

Another ball joint is disclosed in JP-U No. 4-113326. The ball joint comprises a housing having an opening in which a dust cover is fitted. The opening fitted with the dust cover is subjected to a plastic deforming process in order to prevent the dust cover from slipping out of the housing. However the calking process increases steps and costs for making the ball joint.

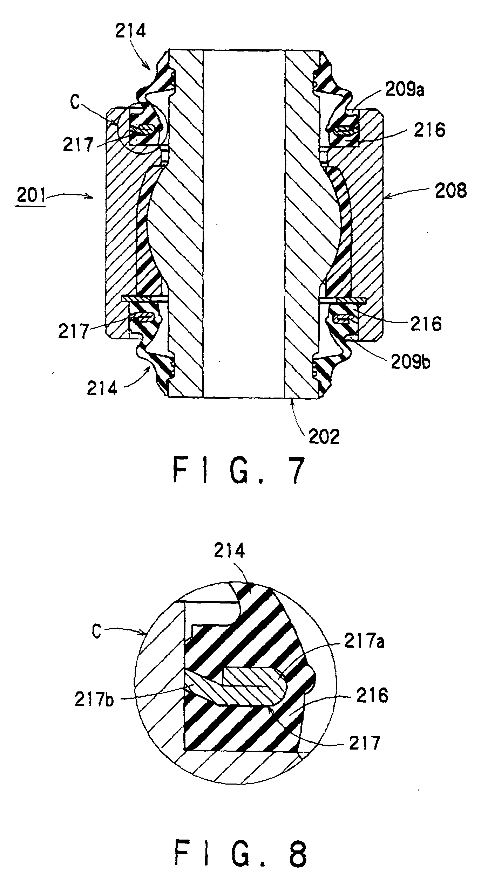

Fig.7 shows a ball joint 201 in longitudinal section, which was considered before arriving at this invention and which shows all of the features of the preamble of each of the claims 1 and 5. A reinforcing ring 217 is embedded in the enlarged open end 216 of the dust cover 214. As shown in Fig.8, the reinforcing ring 217 consists of: a doubled lateral portion 217a which extends toward the inside of the dust cover 214 at a right angle to the axis of the opening 216, is bent toward the bearing and extends back toward the outside of the dust cover 214; a flared portion 217b which extends from the outside end of the doubled lateral portion 217a nearer to the bearing toward the outside of the dust cover 114 farther from the bearing at an obtuse angle to the doubled lateral portion 217a.

In the ball joint 201, the dust cover 214 is firmly fixed in pressed contact with the inside surface of the opening 209a or 209b of the housing 208, by means of the elastic force of the enlarged open end 216 and the flared portion 217b of the reinforcing ring 217.

The enlarged open end 216 of the dust cover 214 is thick in the radial direction since the reinforcing ring 217 has the doubled lateral portion 217a. That is, the inside end of the enlarged open end 216 extends toward the ball stud 202 so much that the tilt of the ball stud is limited.

It is an object of the present invention to solve the above problems and to provide a ball joint having a ball stud which can be tilted at a desired angle, has a dust cover prevented from slipping out even when the ball stud is tilted and is advantageous in reducing the production steps and the costs for the production.

According to the present invention this problem is solved by a ball joint according to claim 1 and a dust cover according to claim 5.

Preferred embodiments of the present invention will be understood from the following detailed description made with reference to the accompanying drawings, in which:
Fig.1 is a longitudinal sectional view of a ball joint in an embodiment of the present invention;
Fig.2 is an enlarged view of a part A in Fig. 1;
Fig.3 is a longitudinal sectional view showing a first process for producing the ball joint in Fig. 1;
Fig.4 is a longitudinal sectional view showing a second process for producing the ball joint in Fig. 1;
Fig.5 is a longitudinal sectional view of a conventional ball joint;
Fig.6 is an enlarged view of a part B in Fig.5;
Fig.7 is a longitudinal sectional view of another conventional ball joint; and
Fig.8 is an enlarged view of a part C in Fig.7.

Preferred embodiments of the present invention will now be described in more detail with reference to the accompanying drawings.

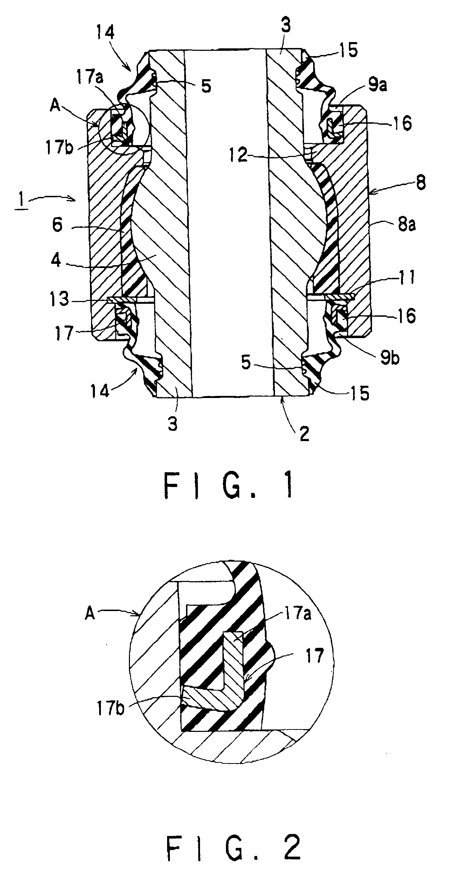

Fig. 1 is a longitudinal sectional view of a ball joint in an embodiment of the present invention. The ball joint 1 shown comprises: a ball stud 2 having a spherical head 4 and stems 3, 3 projecting oppositely from the spherical head 4; a bearing 6 slidably receiving the spherical head 4 of the ball stud 2; a housing 8 having a housing body 8a holding the bearing 6 therein.

Annular fitting grooves 5, 5 are formed in the outer circumferential surfaces of both the stems 3, 3 of the ball stud 2, respectively.

The housing 8 has a substantially cylindrical shape. The housing 8 has a one side opening (housing opening) 9a through which the one stem 3 of the ball stud 2 projects, and another side opening (housing opening) 9b through which the other stem 3 of the ball stud 2 projects. An annular protrusion 12 is formed at the inside surface of the one side opening 9a. An annular groove 11 is formed in the inside surface of the other side opening 9b.

A ring 13 is fitted in the groove 11 of the housing 8. The ring 13 is a C-shaped element, which is substantially annular except a cut-off portion.

Dust covers 14, 14 are fitted between the stems 3, 3 of the ball stud 2 and the housing 8, respectively. Each dust cover 14 comprises a reduced open end (first open end) 15 fitted on the annular groove 5 of the stem 3 of the ball stud 2, and an enlarged open end (second open end) 16 fitted in the opening 9a or 9b of the housing 8. A reinforcing ring 17 is embedded in the enlarged open end 16 of the dust cover 14.

As shown in Fig.2, the reinforcing ring 17 consists of: a cylindrical straight portion 17a which is parallel with the center axis of the enlarged open end 16; and a bent portion 17b which flares from an end of the straight portion 17a, which end is farther from the bearing 6, toward the outer circumference surface of the enlarged open end 16 at a sharp angle to the straight portion 17a. The outside end of the bent portion 17b of the reinforcing ring 17 is preferably exposed on the outer surface of the enlarged open end 16, but could not.

A process for producing the ball joint 1 will be described hereafter.

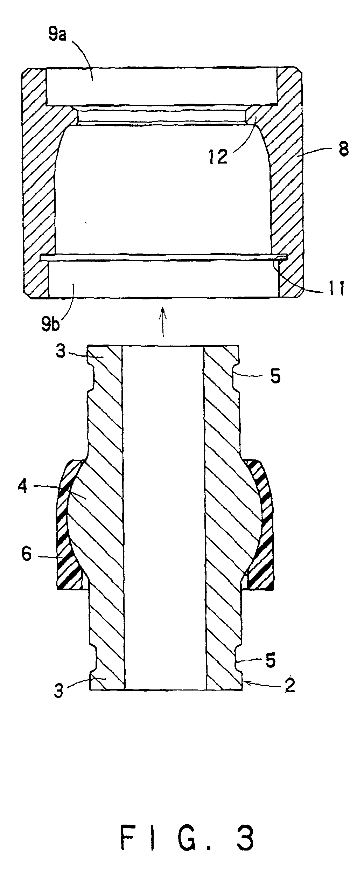

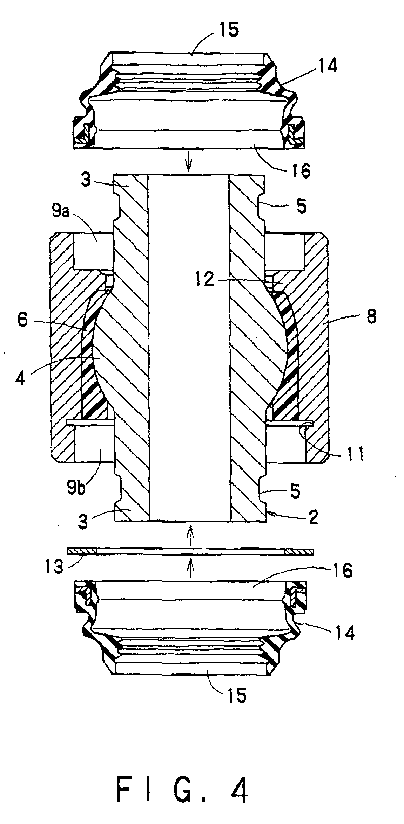

As shown in Fig.3, the ball stud 2 with the bearing 6 fitted on the spherical head 4 thereof is inserted into the housing 8 through the other side opening 9b. Then, as shown in Fig.4, the C ring 13 is forced to contract to a size smaller than the interior diameter of the housing 8, is inserted into the interior of the housing 8 through the other side opening 9b and is fitted into the annular groove 11. Then, the dust cover 14, 14 are fitted into the openings 9a, 9b of the housing 8, respectively. That is, the reduced open ends 15, 15 are fitted in the annular fitting grooves 5, 5 of the stems 3, 3 of the ball stud 2, and the enlarged open ends 16, 16 are fitted in the openings 9a and 9b of the housing 8, respectively.

The outside diameter of the bent portion 17b is slightly larger than the inside diameter of the opening 9a or 9b in the natural state before the assembly as shown in Fig.4. In the thus assembled ball joint 1, each dust cover 14 is firmly fixed in pressed contact with the inside surface of the opening 9a or 9b of the housing 8 by means of the elastic force of not only the enlarged open end 16 but also the bent portion 17b of the reinforcing ring 17. The fixing force of the dust cover 14 in the housing 8 is so strong that the dust cover 14 may not slit out of the housing 8 even when the ball stud 2 is tilted at a large angle.

Furthermore, the tilting range of the ball stud 2 is not limited because the reinforcing ring 17 need not be thick in the radial direction.

The housing 8 of the ball joint 1 need not be subjected to a plastic deformation process because the dust cover 14 is sufficiently firmly fixed in the housing 8 with the reinforcing ring 17. Thus, the ball joint 1 is advantageous in reducing the production steps and the costs for the production.

The bent portion 17b of the reinforcing ring 17 extends relative to the straight portion 17a to form a sharp angle, but the crook portion 17b could extend relative to the straight portion 17a to form a right angle or an obtuse angle. The firmest fixing is achieved when the two portions 17a and 17b form a sharp angle, the second firmest fixing at a right angle, the next firmest fixing at an obtuse angle. The straight portion 17a may be slightly tapered as long as it is essentially parallel with the axis of the enlarged opening 16.

## Claims

1. A ball joint comprising:
a ball stud (2) having a stem (3) and a spherical head (4);
a bearing (6) slidably receiving therein the spherical head of the ball stud;
a housing (8) having a housing body (8a) holding the bearing therein and a housing opening (9a, 9b) through which the stem of the ball stud projects; and
a dust cover (14) having a first open end (15) fitted on the stem of the ball stud, a second open end (16) fitted in the housing opening and a reinforcing ring (17) embedded in the second open end and comprising a straight portion (17a) and a bent portion (17b),
**characterized in that** the straight portion (17a) is substantially parallel with an axis of the second open end (16) and **in that** the bent portion (17b) of the reinforcing ring (17) flares from an end of the straight portion (17a) toward an outer circumferential surface of the second open end (16) at an angle to the straight portion (17a).

2. A ball joint according to claim 1, wherein the bent portion (17a) of the reinforcing ring (17) extends at a right angle with respect to the axis of the second open end.

3. A ball joint according to claim 1, wherein the bent portion (17a) of the reinforcing ring (17) extends back toward the first open end to form a sharp angle with the straight portion.

4. A ball joint according to claim 1, wherein the end of the crook portion of the reinforcing ring is exposed on a surface of the second open end.

5. A dust cover for use with a ball joint comprising: a ball stud (2) having a stem (3) and a spherical head (4); a bearing (6) slidably receiving therein the spherical head of the ball stud; a housing (8) having a housing body (8a) holding the bearing therein and a housing opening (9a, 9b) through which the stem of the ball stud projects;
said dust cover comprising:
a first opening end (15) adapted to be fitted on the stem of the ball stud;
a second open end (16) adapted to be fitted in the housing opening; and
and a reinforcing ring (17) embedded in the second open end and comprising a straight portion (17a) and a bent portion (17b),
**characterized in that** the straight portion (17a) is substantially parallel with an axis of the second open end (16) and **in that** the bent portion (17b) of the reinforcing ring (17) flares from an end of the straight portion (17a) toward an outer circumferential surface of the second open end (16)at an angle to the straight portion (17a).

6. A dust cover for use in a ball joint according to claim 5, wherein the bent portion (17b) of the reinforcing ring extends at a right angle with respect to the axis of the second open end (16).

7. A dust cover for use in a ball joint according to claim 5, wherein the bent portion (17b) of the reinforcing ring extends back toward the first open end to form a sharp angle with the straight portion.

8. A dust cover for use in a ball joint according to claim 5, wherein the end of the bent portion (17b) of the reinforcing ring is exposed on a surface of the second open end.

## Patentansprüche

1. Kugelgelenk mit
einem Kugelzapfen (2) mit einem Schaft (3) und einem Kugelkopf (4);
einem Lager (6), das darin gleitend den Kugelkopf des Kugelzapfens aufnimmt;
einem Gehäuse (8) mit einem Gehäusekörper(8a), der das Lager darin hält, und einer Gehäuseöffnung (9a, 9b), durch welche der Schaft des Kugelzapfens hindurchragt;
und einer Staubkappe (14) mit einem ersten offenen Ende (15), welches auf den Kugelzapfen aufgepaßt ist, einem zweiten offenen Ende (16), welches in die Gehäuseöffnung eingepaßt ist, und einem Verstärkungsring (17), der in das zweite offene Ende eingebettet ist und einen geraden Abschnitt (17a) sowie einen abgebogenen Abschnitt (17b) umfaßt,
**dadurch gekennzeichnet, daß** der gerade Abschnitt (17a) im wesentlichen parallel zu einer Achse des zweiten offenen Endes (16) verläuft und daß der abgebogene Abschnitt (17b) des Verstärkungsringes (17) sich von einem Ende des geraden Abschnittes (17a) zu einer äußeren Umfangsfläche des zweiten offenen Endes (16) unter einem Winkel zum geraden Abschnitt (17a) aufweitet.

2. Kugelgelenk nach Anspruch 1; bei dem der abgebogene Abschnitt (17a) des Verstärkungsringes (17) sich unter einem rechten Winkel bezüglich der Achse des zweiten offenen Endes erstreckt.

3. Kugelgelenk nach Anspruch 1, bei dem der abgebogene Abschnitt (17a) des Verstärkungsringes (17) sich zum ersten offenen Ende zurückerstreckt, um einen spitzen Winkel mit dem geraden Abschnitt zu bilden.

4. Kugelgelenk nach Anspruch 1, bei dem das Ende des abgebogenen Abschnittes des Verstärkungsringes zu einer Oberfläche des zweiten offenen Endes freigelegt ist.

5. Staubkappe zur Verwendung in einem Kugelgelenk mit einem Kugelzapfen (2) mit einem Schaft (3) und einem Kugelkopf (4); einem Lager (6), das den Kugelkopf des Kugelzapfens gleitend aufnimmt; einem Gehäuse (8) mit einem Gehäusekörper (8a), welcher das Lager darin hält, und einer Gehäuseöffnung (9a, 9b), durch welche der Schaft des Kugelzapfens hindurchragt; wobei die Staubkappe umfaßt:
ein erstes offenes Ende (15), das zum Aufpassen auf den Schaft des Kugelzapfens gestaltet ist;
ein zweites offenes Ende (16), das zum Einpassen in die Gehäuseöffnung gestaltet ist, und einen Verstärkungsring (17), der im zweiten offenen Ende eingebettet ist und einen geraden Abschnitt (17a) sowie einen abgebogenen Abschnitt (17b) umfaßt, **dadurch gekennzeichnet, daß** der gerade Abschnitt (17a) im wesentlichen parallel zu einer Achse des zweiten offenen Endes (16) verläuft und daß der gebogenen Abschnitt (17b) des Verstärkungsringes (17) sich von einem Ende des geraden Abschnittes (17a) zu einer äußeren Umfangsfläche des zweiten offenen Endes (16) unter einem Winkel zum geraden Abschnitt (17a) aufweitet.

6. Staubkappe zur Verwendung in einem Kugelgelenk nach Anspruch 5, bei welcher der gebogene Abschnitt (17b) des Verstärkungsringes sich unter einem rechten Winkel bezüglich der Achse des zweiten offenen Endes (16) erstreckt.

7. Staubkappe zur Verwendung in einem Kugelgelenk nach Anspruch 5, bei welcher der gebogene Abschnitt (17b) des Verstärkungsringes sich zurück zum ersten offenen Ende erstreckt, um einen spitzen Winkel mit dem geraden Abschnitt zu bilden.

8. Staubkappe zur Verwendung in einem Kugelgelenk nach Anspruch 5, bei dem das Ende des gebogenen Abschnittes (17b) des Verstärkungsringes zu einer Oberfläche des zweiten offenen Endes freigesetzt ist.

## Revendications

1. Articulation à rotule comprenant :
un pivot à rotule (2) possédant une tige (3) et une tête sphérique (4) ;
un palier (6) recevant de manière coulissante la tête sphérique du pivot à rotule ;
un logement (8) possédant un corps de logement (8a) renfermant le palier et une ouverture de logement (9a, 9b) dans laquelle la tige du pivot à rotule se projette ; et
un couvercle antipoussière (14) possédant une première extrémité ouverte (15) placée sur la tige du pivot à rotule, une seconde extrémité ouverte (16) placée dans l'ouverture de logement et une bague de renforcement (17) intégrée. à la seconde extrémité ouverte et comprenant une partie droite (17a) et une partie courbée (17b),
**caractérisée en ce que** la partie droite (17a) qui est sensiblement parallèle à un axe de la seconde extrémité ouverte (16) et que la partie courbée (17b) de la bague de renforcement s'évase d'une extrémité de la partie droite (17a) vers une surface extérieure circonférentielle de la seconde extrémité ouverte (16) à un angle par rapport à la partie droite (17a).

2. Articulation à rotule selon la revendication 1, dans laquelle la partie courbée (17b) de la bague de renforcement (17) s'étend à un angle droit par rapport à l'axe de la seconde extrémité ouverte.

3. Articulation à rotule selon la revendication 1, dans laquelle la partie courbée (17b) de la bague de renforcement (17) s'étend vers l'arrière vers la première extrémité ouverte de manière à former un angle aigu avec la partie droite.

4. Articulation à rotule selon la revendication 1, dans laquelle l'extrémité de la partie de coude de la bague de renforcement affleure au niveau d'une surface de la seconde extrémité ouverte.

5. Couvercle antipoussière pour utilisation avec une articulation à rotule comprenant : un pivot à rotule (2) possédant une tige (3) et une tête sphérique (4) ; un palier (6) recevant de manière coulissante la tête sphérique du pivot à rotule ; un logement (8) possédant un corps de logement (8a) renfermant le palier et une ouverture de logement (9a, 9b) dans laquelle la tige du pivot à rotule se projette ;
ledit couvercle antipoussière comprenant :
une première extrémité d'ouverture (15) adaptée pour être placée sur la tige du pivot à rotule ;
une seconde extrémité ouverte (16) adaptée pour être placée dans l'ouverture de logement; et
une bague de renforcement (17) intégrée à la seconde extrémité ouverte et comprenant une partie droite (17a) et une partie courbée (17b),
**caractérisé en ce que** la partie droite (17a) est sensiblement parallèle à un axe de la seconde extrémité ouverte (16) et que la partie courbée (17b) de la bague de renforcement s'évase d'une extrémité de la partie droite (17a) vers une surface extérieure circonférentielle de la seconde extrémité ouverte (16) à un angle par rapport à la partie droite (17a).

6. Couvercle antipoussière pour utilisation dans une articulation à rotule selon la revendication 5, dans lequel la partie courbée (17b) de la bague de renforcement s'étend à un angle droit par rapport à l'axe de la seconde extrémité ouverte (16).

7. Couvercle antipoussière pour utilisation dans une articulation à rotule selon la revendication 5, dans lequel la partie courbée (17b) de la bague de renforcement s'étend vers l'arrière vers la première extrémité ouverte de manière à former un angle aigu avec la partie droite.

8. Couvercle antipoussière pour utilisation dans une articulation à rotule selon la revendication 5, dans lequel l'extrémité de la partie courbée (17b) de la bague de renforcement affleure au niveau d'une surface de la seconde extrémité ouverte.
